# EUROPEAN PATENT SPECIFICATION

(11) **EP 2 905 056 B1**
(45) Date of publication and mention of the grant of the patent: **27.03.2019**
(21) Application number: 15154032.5
(22) Date of filing: 05.02.2015
(51) Int. Cl.: A63H 17/00, A63H 17/26, A63H 30/04, B60B 35/00, B60B 35/10, B60G 3/01, B60B 35/08, F16N 7/18, F16N 7/02

(54) **RADIO-CONTROLLED SELF-LEVELLING VEHICLE**
FUNKGESTEUERTES FAHRZEUG MIT SELBSTNIVELLIERUNG
VÉHICULE RADIO-TELECOMMANDÉ AVEC AUTOCALAGE

(30) Priority: 05.02.2014 IT CH20140003
(43) Date of publication of application: 12.08.2015
(73) Proprietor: MDB S.r.l. con Socio Unico, 66034 Lanciano (IT)
(72) Inventor: Di Biase, Mario, 66034 LANCIANO (IT)
(74) Representative: Boggio, Luigi

(56) References cited:
- EP-A1- 0 887 520
- WO-A1-2011/045660
- JP-A- H0 286 908
- US-A- 4 969 530
- US-A- 5 785 576
- US-A- 5 892 360
- US-A1- 2002 005 303

## Description

The present patent application relates to a radio-controlled self-levelling vehicle.

It is known that, for the activities of maintenance of green areas, of cleaning of impervious places with inclines even steeper than 60° (which are hard to reach with normal means), such as for example edges of roads and motorways, radio-controlled vehicles are used having a weight higher than or equal to 1000 kg. In particular, vehicles of this type are equipped with crawler tracks and present the disadvantage that, during the performance of normal activities, frequently in extremely steep places, the tracks come out of their seats, causing a series of inconveniences, such as machine downtime and interruption of activities. Consequently, the operator is forced to reach the vehicle and proceed to re-arranging the tracks. In these conditions, safety of the operator is exposed to considerable risk given that frequently the conditions of the terrain on which he is working are very difficult and present numerous obstacles.

Furthermore, in vehicles of a known type, the engine comprises an oil-draught system with a duct that is fixed in the central part of the oil sump. This draught system presents the disadvantage that, in the case where the vehicle is working on a slope, the oil, under the action of the force of gravity, accumulates in a corner of the oil sump far from the central part with the problem that the oil-draught system no longer manages to draw in the oil, with consequent interruption of the vehicle and issue of a fault warning to the operator.

Document US4969530 discloses an all-terrain vehicle having two bogies movably joined at their inner ends and pivotally mounted on each side of the vehicle and two main wheels mounted on the ends of one of the bogies and a third wheel mounted on the other end of the other bogie.

Document WO2011045660 discloses an adjustment apparatus for varying the ground clearance of a vehicle including an adjustable leg configured to couple to a chassis and wheel of a vehicle, and a removable stop to releasably fix the adjustable leg in a desired condition. The adjustable leg may include a main leg and a drop leg that is movable within the leg, the main leg configured to couple to a chassis of a vehicle and the drop leg configured to couple to a vehicle wheel.

The aim of the present invention is to provide a radio-controlled self-levelling vehicle that will overcome the drawbacks described above.

The aim of the present invention is to provide a radio-controlled self-levelling vehicle that will be simple and economically advantageous to produce.

The aim of the present invention is to provide a radio-controlled self-levelling vehicle that has a reduced weight and that will guarantee operation in any condition avoiding any need for intervention on the part of the operator.

The present invention provides a self-levelling vehicle as specified in Claim 1 and in the subsequent claims.

The invention will now be described with reference to the annexed drawings, which illustrate a non-limiting example of embodiment thereof and in which:
- Figure 1 is a perspective view, with parts removed for reasons of clarity, of the vehicle according to the present invention;
- Figures 2 to 5 are schematic front views of the vehicle according to the present invention in different operating conditions;
- Figure 6 is a partially exploded perspective view of a detail of the vehicle according to the present invention;

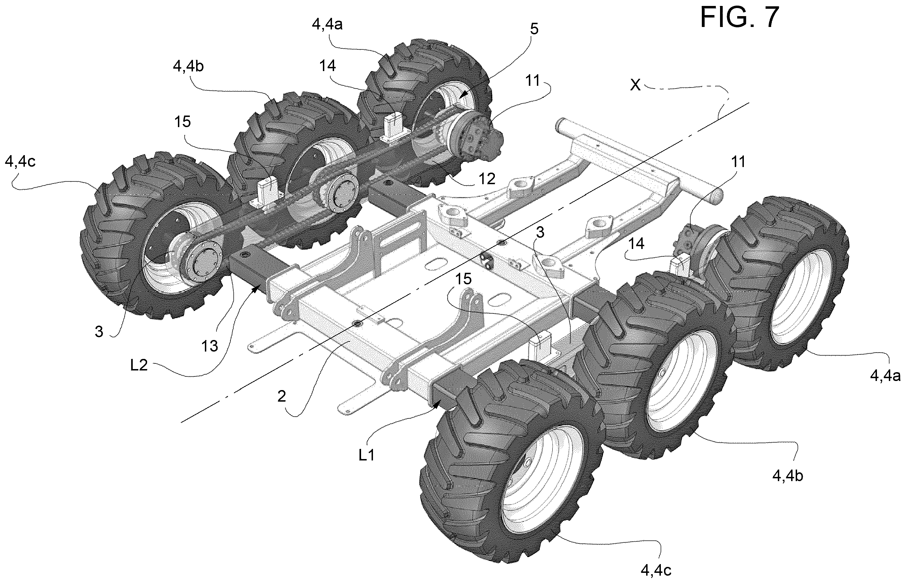

- Figure 7 is a perspective view of the detail of Figure 6;

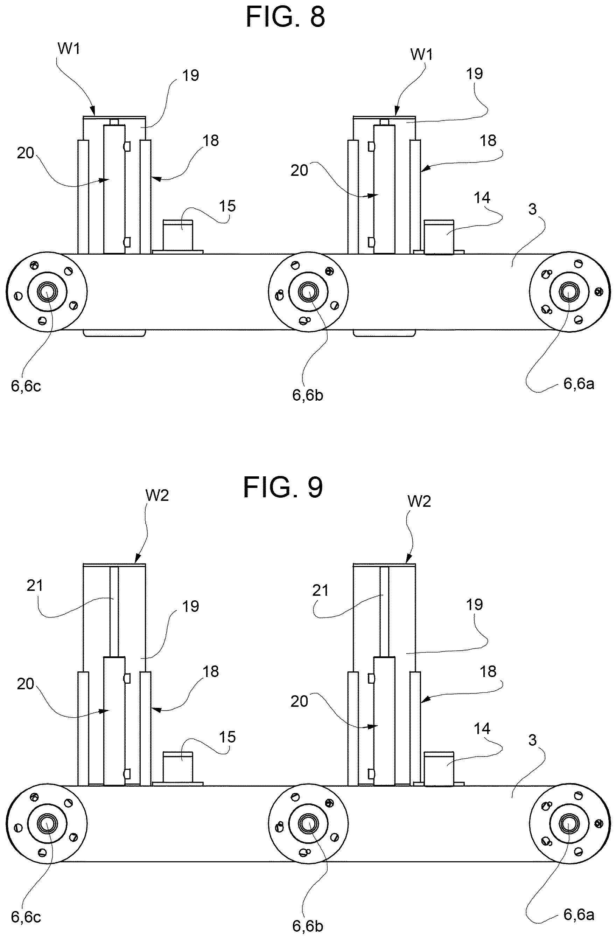

- Figures 8 and 9 show a side view of a chassis in a first operating configuration and a second operating configuration, respectively;

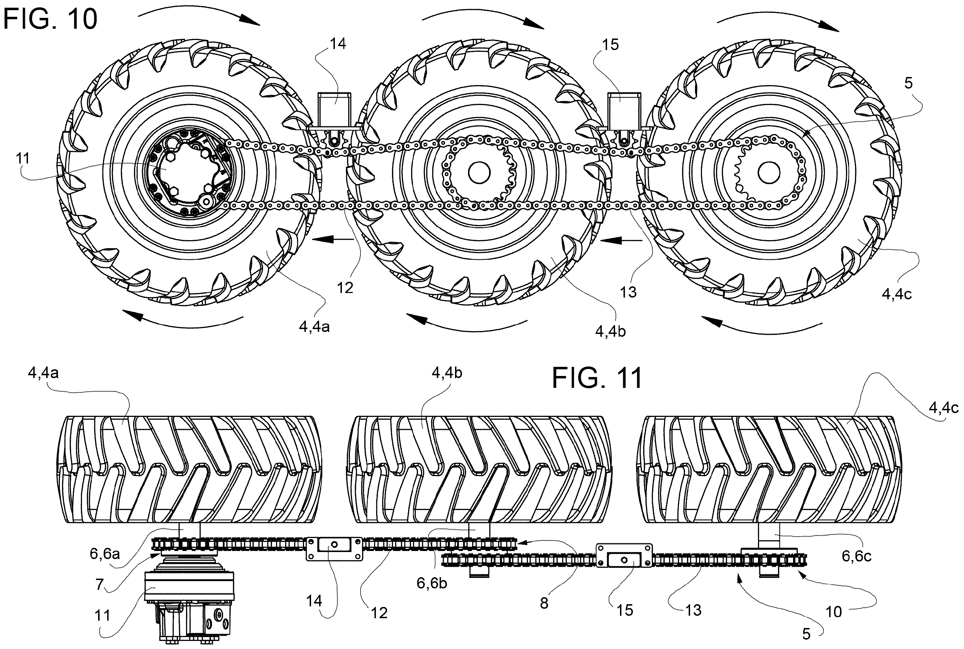

- Figure 10 is a side view of a detail of Figure 7;
- Figure 11 is a top plan view of the detail of Figure 10;
- Figures 12 to 15 are schematic views, with parts removed for reasons of clarity, of an engine of the vehicle according to the present invention in respective different operating configurations;
- Figure 16 is a perspective view of a system for intake of the oil according to the present invention;
- Figure 17 is a perspective view of the system illustrated in Figure 16; and
- Figure 18 is a cross-sectional view according to the lines XVIII-XVIII of Figure 17.

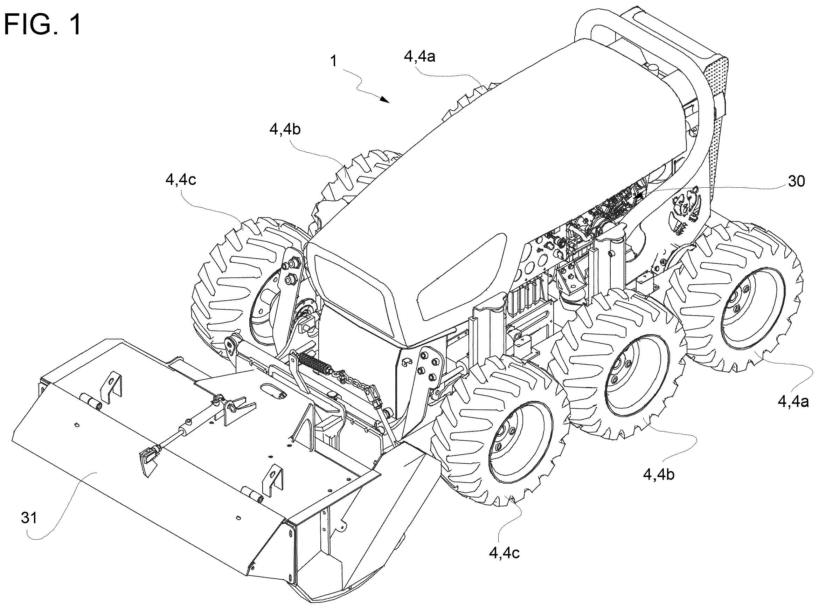

In Figure 1, designated as a whole by 1 is a radio-controlled vehicle comprising a bottom panel 2 having a longitudinal axis X, two movement assemblies G1 and G2, each of which is set on a respective side of the vehicle 1, and two levelling units L1 and L2, which are set between the bottom panel 2 and each movement assembly G1, G2 and are designed to vary selectively the relative position between the bottom panel 2 and each movement assembly G1, G2.

In particular, each movement assembly G1 or G2 comprises a guard 3, three wheels 4, and a chain transmission system 5. Each wheel 4 is connected in a known way to the guard 3 and is able to turn about a respective shaft 6. Each shaft 6 is transverse to the axis X of the bottom panel 2. In particular, each movement assembly G1 or G2 has a drive wheel 4a, an end wheel 4c and an intermediate wheel 4b, which is set between the drive wheel 4a and the end wheel 4c.

Each movement assembly G1 or G2 comprises a gear 7 fitted on the shaft 6a of the drive wheel 4a, a pair of gears 8 and 9 fitted on the shaft 6b of the intermediate wheel 4b, and a gear 10 fitted on the shaft 6c of the end wheel 4c. Each gear 7-10 is rotationally fixed with respect to the respective shaft 6. The gears 7-10 are arranged within the guard 3.

Each transmission system 5 comprises a hydraulic motor 11, which is connected in a known way to the shaft 6a of the drive wheel 4a and is designed to turn the shaft 6a itself, a chain 12 which is run over the gears 7 and 8 and is designed to transmit (in a known way) rotation to the shaft 6b of the intermediate wheel 4b, and a chain 13, which is run over the gears 9 and 10 and is designed to transmit (in a known way) rotation to the shaft 6c of the end wheel 4c. The chains 12 and 13 are located inside the guard 3.

Each transmission system 5 further comprises a chain-tensioner 14 of a known type, which is designed to tension the chain 12, and a chain-tensioner 15 of a known type, which is designed to tension the chain 13.

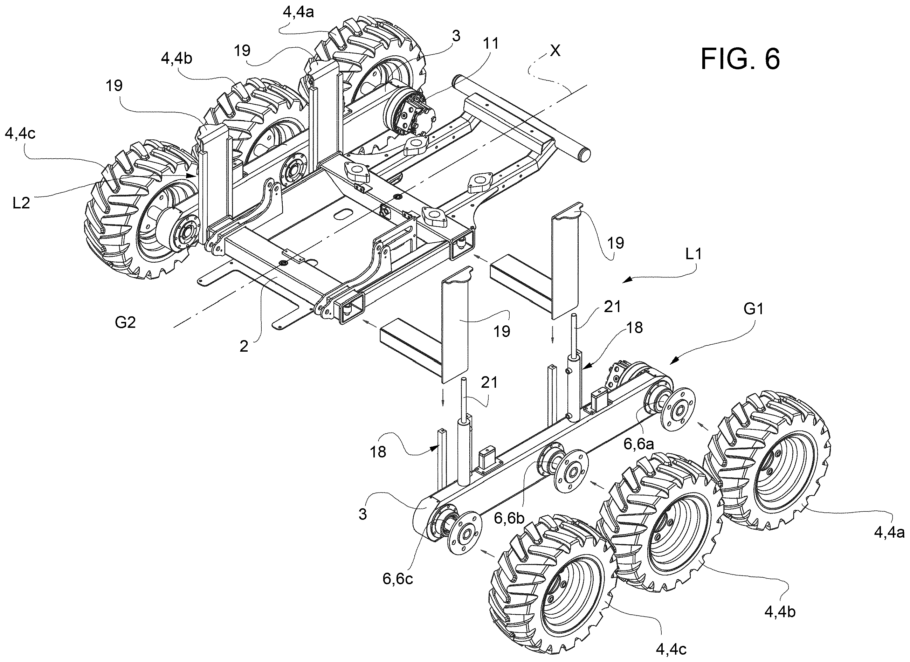

According to what is illustrated in Figure 6, each levelling unit L1 or L2 comprises two levelling systems 16 and 17. Each levelling system 16,17 comprises a guide 18, a slide 19, which is slidably mounted within said guide 18, and a drive 20 which selectively moves the guide 18 and the slide 19 with respect to one another. According to what is illustrated in Figure 6, the guide 18 is fixed with respect to the guard 3, whereas the slide 19 is fixed with respect to the bottom panel 2. The drive 20 is a hydraulic cylinder comprising a piston 21, which slides in a reciprocating way between a first working position W1 and a second working position W2. The guide 18 is transverse, in particular perpendicular to the guard 3. The drive 20 is fixed to the guard 3 and is designed to cause the slide 19 to translate within the guide 18.

Each guide 18 comprises two grooved columns. The slide 19 is a metal plate having a bent end connected to the end of the piston 21 of the hydraulic cylinder 20.

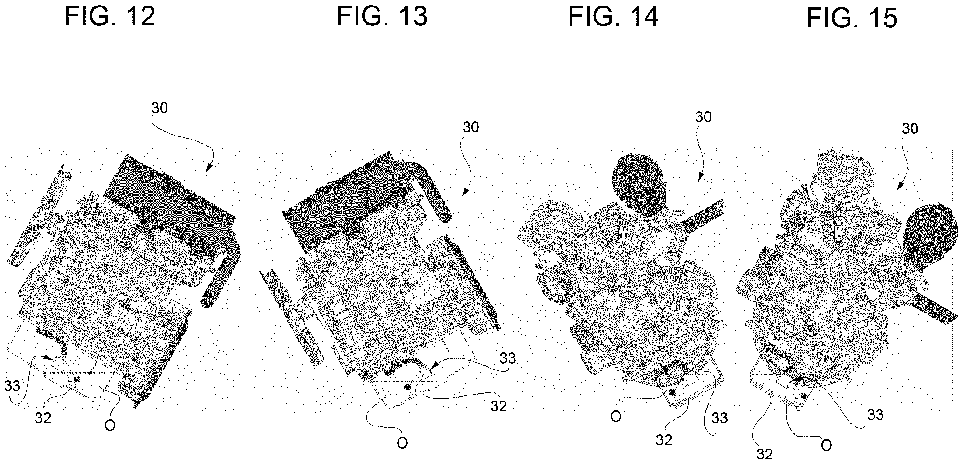

The vehicle 1 moreover comprises an engine 30, which is of a known type and is illustrated in Figures 12 to 15. The engine 30 is installed on the bottom panel 2 (Figure 1) and is designed to drive equipment 31 installed on the vehicle 1 for carrying out a given operation on the terrain. The equipment 31 may be chosen from a set of different items (of a known type and not illustrated) according to the type of operation to be performed.

As illustrated in Figures 12 to 15, the engine 30 comprises an oil sump 32 and a draught system 33, which is mobile and is designed to vary the position of the draught mouth 34 according to the inclination of the vehicle 1 so as to guarantee draught of the oil 0 in any operating condition.

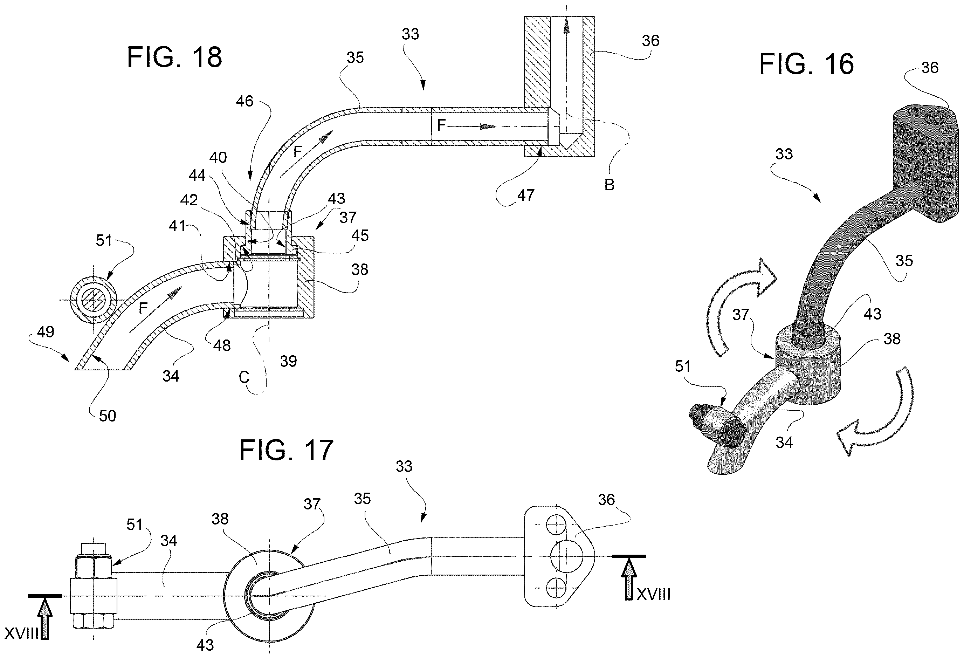

Illustrated in detail in Figures 16 to 18 is the draught system 33, which comprises a draught tube 34, a connector tube 35, and a supply duct 36 of the engine 30. The connector tube 35 is set between the draught tube 34 and the supply duct 36.

In particular, the draught system 33 comprises a rotary joint 37, which is set between the draught tube 34 and the connector tube 35. The joint 37 enables rotation of the draught tube 34 with respect to the connector tube 35. According to what is illustrated in Figure 18, the supply duct 36 has a longitudinal axis B.

The joint 37 comprises a body 38 with a longitudinal axis C, an internal cavity 39, a top opening 40, which shares the axis C, and a side opening 41, which is substantially parallel to the axis C. The openings 40 and 41 set the cavity 39 in communication with the outside world. The cavity 39 has a shoulder surface 42 inside the top opening 40. The joint 37 comprises a bushing 43, which is of a known type and in turn comprises a tubular body 44 and an external arrest element 45.

The bushing 43 is inserted inside the cavity 39 with the arrest element 45 in contact with the shoulder surface 42 and projects with the tubular body 44 on the outside of the body 38. The tubular body 44 shares the axis B. The body 38 is mounted axially fixed and rotationally rotating on the bushing 43.

The tubular body 44 of the bushing 43 is inserted at least partially within one end 46 of the connector tube 35 and is connected thereto in a known way. The other end 47 of the connector tube 35 is connected in a known way to the supply duct 36 so as to set the inside of the connector tube 35 in communication with the inside of the supply duct 36.

One end 48 of the draught tube 34 is inserted inside the opening 41 and is connected to the body 38 in a known way to set the inside of the draught tube 34 in communication with the cavity 39.

Located at the other end 49 of the draught tube 34 is the draught mouth 50, which is designed to be immersed in the oil O.

A portion of the draught tube 34 is made heavier so as to turn the draught tube 34 itself about the end 46 of the connector tube 35, in particular about the bushing 43, under the action of the force of gravity.

According to what is illustrated in Figures 16 to 18, a weight 51 is fixed on the outside of the draught tube 34 itself. The weight 51 is designed to turn the body 38 and the draught tube 34 about the bushing 43 under the action of the force of gravity. Preferably, the weight 51 is set at the free end of the draught tube 34.

According to what is illustrated in Figures 16 to 18, the axis C of the body 38 is substantially parallel to the axis B of the supply duct 36. The connector tube 35 has a portion that is substantially perpendicular to the axis B and a final stretch in the proximity of the joint 37 that is arched. The draught tube 34 has a substantially arched shape. The weight 51 is releasably mounted on the draught tube 34 so as to enable any possible replacements. In particular, the weight 51 is formed by a nut-and-bolt assembly.

The particular shape and mutual arrangement of the components of the draught system 33 is such as to enable the draught mouth 50 to reach the corners of the oil sump 32. The shape and arrangement of the connector tube 35 is such as to position the joint 37 substantially in a central position of the oil sump 32.

Finally, the vehicle 1 comprises a radio-control system (not illustrated and of a known type), which is designed to drive independently each hydraulic cylinder 20 and each hydraulic motor 11, as well as the equipment 31 provided on board the vehicle 1 itself.

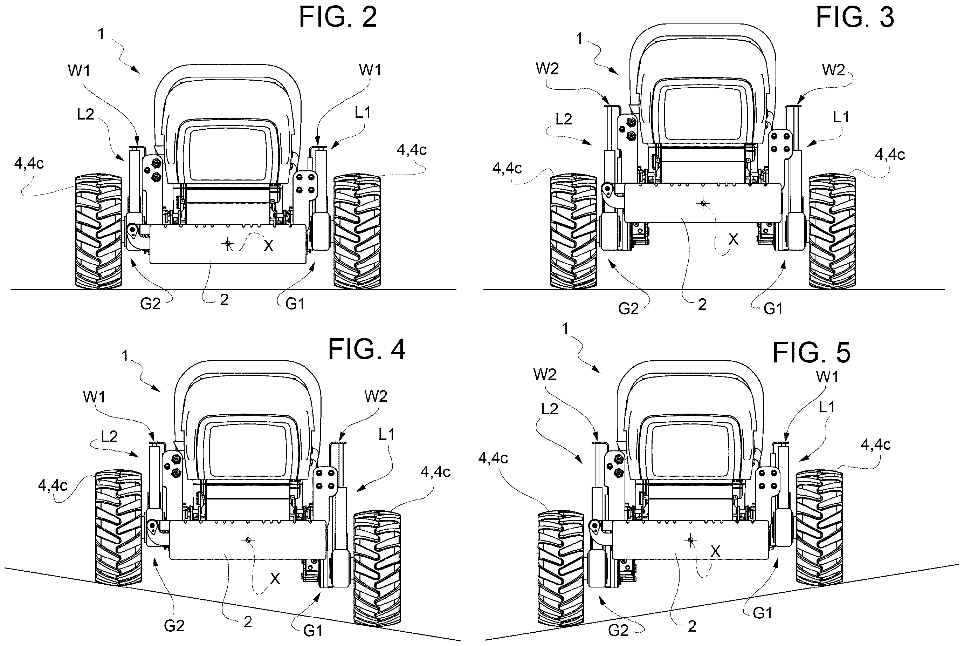

In use, the operator, by means of the radio control, regulates the height of the pistons 21 of the levelling systems L1, L2 so as to adapt the operating conditions of the vehicle 1 to the peculiarities of the terrain. By way of example, in Figures 2 to 5 the vehicle 1 is illustrated in respective different operating conditions. Furthermore, thanks to the draught system 33, the oil 0 is supplied to the engine 30 in any working condition. Illustrated, for example, in Figures 12 to 15 are respective different operating conditions; namely: illustrated in Figure 12 is the engine 30 with the vehicle 1 oriented downhill; illustrated in Figure 13 is the engine 30 with the vehicle 1 oriented uphill; illustrated in Figure 14 is the engine 30 with the vehicle 1 on a left-hand slope; and Figure 15 illustrates the vehicle 1 on a right-hand slope.

It should be noted that each hydraulic cylinder 20 can be driven independently of the other hydraulic cylinders 20. Consequently, the possible operating conditions of the vehicle 1 are more than the ones illustrated.

Furthermore, even if the vehicle 1 is inclined, the draught system 33 enables the draught tube 34 to turn according to the slope of the terrain (Figures 12 to 15), thus guaranteeing that the draught mouth 50 is always immersed in the oil 0 and hence preventing any undesirable interruption of the vehicle 1.

Furthermore, the guards 3 enable use of just two hydraulic cylinders 20 per side, reducing the weight of the vehicle 1 and enabling reduction of the risk of sliding of the vehicle 1 itself on the steepest slopes. Furthermore, it is possible to regulate simultaneously all the wheels 4 on each side of the vehicle 1 itself.

The vehicle 1 of the type described above presents the advantage that, thanks to the use of the wheels 4 instead of the tracks, it is possible to guarantee maximum safety of the vehicle 1 in so far as the problem of re-arranging the track is altogether eliminated. The use of six (or more) wheels 4 per side of the vehicle 1 enables a greater grip by the vehicle 1 on the terrain, preventing the vehicle from possibly losing adherence and sliding down the steepest slopes. Furthermore, the use of six wheels 4 makes it possible to work on plane surfaces, such as fields, without any damage to the surfaces.

Furthermore, thanks to the levelling systems L1, L2, the vehicle 1 overcomes the obstacle of the slope and operates as if it were working in normal conditions of the terrain.

The vehicle 1 is able to operate even on slopes steeper than 60°.

Consequently, the radio-controlled self-levelling vehicle 1 of the type described above presents a reduced weight and guarantees operation in any condition, thus avoiding any need for intervention on the part of the operator.

## Claims

1. A radio-controlled self-levelling vehicle comprising a bottom panel (2), two movement assemblies (G1, G2), each of which is set on a respective side of the vehicle (1) and in turn comprises a plurality of wheels (4); the vehicle (1) further comprises two levelling units (L1, L2), which are set between the bottom panel (2) and each movement assembly (G1; G2) and are designed to vary selectively the relative position between the bottom panel (2) and each movement assembly (G1; G2); wherein each movement assembly (G1; G2) comprises a chain-transmission system (5) and a hydraulic motor (11); in particular, each chain-transmission system (5) comprises three wheels (4), and the hydraulic motor (11) is connected to a drive wheel (4a), which transmits the motion to the remaining wheels (4); wherein each movement assembly (G1; G2) comprises a guard (3) for enclosing, at least in part, the chain-transmission system (5); wherein each levelling unit (L1; L2) comprises a slide-guide system (18, 19) and a drive (20), which is designed to vary selectively the relative position of the components of said slide-guide system (18, 19).

2. The vehicle according to Claim 1, wherein said drive is a hydraulic cylinder (20), which is fixed on said guard (3).

3. The vehicle according to Claim 2 and comprising a radio-control system for independent driving of each hydraulic cylinder (20) and of each hydraulic motor (11).

4. The vehicle according to any one of the preceding claims and comprising an engine (30), which in turn comprises an oil sump (32) and a mobile draught system (33) for the oil (0), so as to guarantee draught of the oil (0) in any condition of use of the vehicle (1).

5. The vehicle according to Claim 1, wherein the draught system (33) comprises a draught tube (34), a supply duct (36) for supplying the oil (0) to the engine (30), and a connector tube (35), which is set between said draught tube (34) and said supply duct (36); wherein the vehicle (1) comprises a joint (37) between said connector tube (35) and said draught tube (34); wherein the draught tube (34) is rotatably mounted so as to turn about an end (46) of the connector tube (35).

6. The vehicle according to Claim 5, wherein the size and shape of the connector tube (35) are such as to set said joint (37) in a central position of the oil sump (32).

7. The vehicle according to Claim 5 or Claim 6, wherein a portion of the draught tube (34) is made heavier so as to turn about the end (46) of the connector tube (35) under the action of the force of gravity.

8. The vehicle according to Claim 7 and comprising a weight (51) applied on the outside of the draught tube (34); in particular, the weight (51) is releasably mounted on the draught tube (34); in particular, the weight (51) comprises a nut-and-bolt system.

9. The vehicle according to Claim 7 or Claim 8, wherein the shape and size of the draught tube (34) is such as to reach different points of the oil sump (33).

## Patentansprüche

1. Funkgesteuertes Fahrzeug mit Selbstnivellierung, mit einem Bodenblech (2), zwei Bewegungsgruppen (G1, G2), von denen jede an einer jeweiligen Seite des Fahrzeugs (1) angeordnet ist und wiederum mehrere Räder (4) umfasst; wobei das Fahrzeug (1) ferner zwei Nivellierungseinheiten (L1, L2) umfasst, die zwischen dem Bodenblech (2) und jeder Bewegungsgruppe (G1; G2) angeordnet und ausgestaltet sind, um wahlweise die relative Stellung zwischen dem Bodenblech (2) und jeder Bewegungsgruppe (G1; G2) zu verändern; wobei jede Bewegungsgruppe (G1; G2) ein Kettenübertragungs-System (5) und einen Hydraulikmotor (11) umfasst; wobei insbesondere jedes Kettenübertragungs-System (5) drei Räder (4) umfasst und der Hydraulikmotor (11) mit einem Antriebsrad (4a) verbunden ist, das die Bewegung an die anderen Räder (4) überträgt; wobei jede Bewegungsgruppe (G1; G2) einen Schutz (3) umfasst zum wenigstens teilweisen Umschließen des Kettenübertragungs-Systems (5); wobei jede Nivellierungseinheit (L1; L2) ein Schlitten-Führungssystem (18, 19) und einen Antrieb (20) umfasst, der ausgestaltet ist, um die relative Stellung der Komponenten des Schlitten-Führungssystems (18, 19) zu verändern.

2. Fahrzeug nach Anspruch 1, wobei der Antrieb ein Hydraulikzylinder (20) ist, der an dem Schutz (3) fixiert ist.

3. Fahrzeug nach Anspruch 2 und ein funkgesteuertes System umfassend zum unabhängigen Antreiben jedes Hydraulikzylinders (20) und jedes Hydraulikmotors (11).

4. Fahrzeug nach einem der vorstehenden Ansprüche und einen Motor (30) umfassend, der wiederum eine Ölwanne (32) und ein mobiles Abzugssystem (33) für das Öl (O) umfasst, um ein Abziehen des Öls (O) in jeglichem Benutzungszustand des Fahrzeugs (1) zu gewährleisten.

5. Fahrzeug nach Anspruch 1, wobei das Abzugssystem (33) ein Abzugsrohr (34), eine Zuführleitung (36) zum Zuführen des Öls (O) an den Motor (30) und eine Anschlussleitung (35) umfasst, die zwischen dem Abzugsrohr (34) und der Zuführleitung (36) angeordnet ist; wobei das Fahrzeug (1) ein Verbindungsstück (37) zwischen der Anschlussleitung (35) und dem Abzugsrohr (34) umfasst; wobei das Abzugsrohr (34) drehbar montiert ist, um um ein Ende (46) der Anschlussleitung (35) drehbar zu sein.

6. Fahrzeug nach Anspruch 5, wobei die Größe und Form der Anschlussleitung (35) derart sind, dass das Verbindungsstück (37) in einer zentralen Position der Ölwanne (32) anordenbar ist.

7. Fahrzeug nach Anspruch 5 oder Anspruch 6, wobei ein Abschnitt des Abzugsrohrs (34) schwerer gestaltet ist, um sich um das Ende (46) der Anschlussleitung (35) unter Einwirkung der Schwerkraft zu drehen.

8. Fahrzeug nach Anspruch 7 und ein an der Außenseite des Abzugsrohrs (34) angebrachtes Gewicht (51) umfassend; wobei insbesondere das Gewicht (51) lösbar an dem Abzugsrohr (34) montiert ist; wobei insbesondere das Gewicht (51) ein System aus Schraube und Mutter aufweist.

9. Fahrzeug nach Anspruch 7 oder Anspruch 8, wobei Form und Größe des Abzugsrohrs (34) derart sind, dass unterschiedliche Stellen der Ölwanne (33) erreichbar sind.

## Revendications

1. Véhicule radio-télécommandé avec autoréglage d'assiette comprenant un panneau de fond (2), deux ensembles de déplacement (G1, G2), dont chacun est placé sur un côté respectif du véhicule (1) et comprend à son tour une pluralité de roues (4) ; le véhicule (1) comprend en outre deux unités de réglage d'assiette (L1, L2), lesquelles sont placées entre le panneau de fond (2) et chaque ensemble de déplacement (G1 ; G2) et sont conçues pour modifier de manière sélective la position relative entre le panneau de fond (2) et chaque ensemble de déplacement (G1 ; G2) ; où chaque ensemble de déplacement (G1 ; G2) comprend un système de transmission à chaîne (5) et un moteur électrique hydraulique (11) ; en particulier, chaque système de transmission à chaîne (5) comprend trois roues (4), et le moteur électrique hydraulique (11) est relié à une roue motrice (4a), laquelle transmet le mouvement aux roues restantes (4) ; où chaque ensemble de déplacement (G1 ; G2) comprend un élément de protection (3) destiné à encercler, au moins en partie, le système de transmission à chaîne (5) ; où chaque unité de réglage d'assiette (L1 ; L2) comprend un système de guide coulissant (18, 19) et un entraînement (20), lequel est conçu pour modifier de manière sélective la position relative des composants dudit système de guide coulissant (18, 19).

2. Véhicule selon la revendication 1, dans lequel ledit entraînement est un vérin hydraulique (20), lequel est fixé sur ledit élément de protection (3).

3. Véhicule selon la revendication 2 et comprenant un système de radio-télécommande permettant un entraînement indépendant de chaque vérin hydraulique (20) et de chaque moteur électrique hydraulique (11).

4. Véhicule selon l'une quelconque des revendications précédentes et comprenant un moteur (30), lequel comprend à son tour un carter d'huile (32) et un système d'aspiration mobile (33) pour l'huile (O), de sorte à garantir l'aspiration de l'huile (O) dans toute situation d'utilisation du véhicule (1).

5. Véhicule selon la revendication 1, dans lequel le système d'aspiration (33) comprend un tube d'aspiration (34), une conduite d'alimentation (36) destinée à alimenter en huile (O) le moteur (30), et un tube de raccord (35), lequel est placé entre ledit tube d'aspiration (34) et ladite conduite d'alimentation (36) ; où le véhicule (1) comprend un joint (37) entre ledit tube de raccord (35) et ledit tube d'aspiration (34) ; où le tube d'aspiration (34) est monté avec possibilité de pivotement de sorte à pivoter autour d'une extrémité (46) du tube de raccord (35).

6. Véhicule selon la revendication 5, dans lequel la taille et la forme du tube de raccord (35) sont telles à permettre de placer ledit joint (37) dans une position centrale du carter d'huile (32).

7. Véhicule selon la revendication 5 ou la revendication 6, dans lequel une partie du tube d'aspiration (34) est plus lourde de sorte à pivoter autour de l'extrémité (46) du tube de raccord (35) sous l'effet de la force de gravité.

8. Véhicule selon la revendication 7 et comprenant un poids (51) appliqué sur l'extérieur du tube d'aspiration (34) ; en particulier, le poids (51) est monté de manière amovible sur le tube d'aspiration (34) ; en particulier , le poids (51) comprend un système de boulon et d'écrou.

9. Véhicule selon la revendication 7 ou la revendication 8, dans lequel la taille et la forme du tube d'aspiration (34) sont telles à permettre d'atteindre différents points du carter d'huile (33).
